(19) Europäisches Patentamt / European Patent Office / Office européen des brevets

(11) **EP 4 011 929 A1**

(12) **EUROPEAN PATENT APPLICATION**

(43) Date of publication:
**15.06.2022 Bulletin 2022/24**

(21) Application number: **20213852.5**

(22) Date of filing: **14.12.2020**

(51) International Patent Classification (IPC):
**C08G 18/76** (2006.01)     **C08J 9/14** (2006.01)
**C08J 9/00** (2006.01)     **B32B 15/04** (2006.01)
**B32B 15/20** (2006.01)     **C08G 18/48** (2006.01)

(52) Cooperative Patent Classification (CPC):
**C08G 18/7664; C08G 18/4816; C08G 18/482;**
**C08J 9/0023; C08J 9/144; C08J 9/146;**
C08G 2110/0025; C08G 2110/0033;
C08J 2203/162; C08J 2375/04

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not yet been filed**

(74) Representative: **Levpat**
**c/o Covestro AG**
**Gebäude 4825**
**51365 Leverkusen (DE)**

(54) **COMPOSITION FOR FORMING POLYURETHANE FOAM, POLYURETHANE FOAM, AND THERMAL INSULATING MATERIAL**

(57)     Provided is a composition for forming a polyurethane foam having excellent surface quality of a formed article, in particular, a polyurethane foam having excellent smoothness.

    The invention is a composition for forming a polyurethane foam, in which the composition comprises a hydrofluoroolefin as a foaming agent; and the composition comprises 0.2 to 6 parts by mass of at least one compound represented by Formula 1 relative to 100 parts by mass of the composition:

$$RO(CH_2CH_2O)_nR \qquad \text{(Formula 1)}$$

where R is a C1 to C3 linear or branched alkyl, and n is an integer of 1 or more.

Processed by Luminess, 75001 PARIS (FR)

**Description**

Technical Field

The present invention relates to a composition for forming a polyurethane foam, a polyurethane foam formed from the composition, and a thermal insulating material comprising the foam. More specifically, the present invention relates to a composition for forming a polyurethane foam having excellent surface quality of a formed article, in particular, a polyurethane foam having excellent smoothness.

Background Art

Among resin-based foams, polyurethane foams, in particular, a rigid polyurethane foam has been widely used as a foaming thermal insulating material due to its excellent thermal insulating property. Polyurethane foams are usually produced by mixing a polyol and a polyisocyanate together with a catalyst, a foaming agent, a foam stabilizer, or the like appropriately blended as necessary to cause foaming.

Conventionally, as a foaming agent for a rigid polyurethane foam, hydrofluorocarbon (HFC)-based foaming agents such as HFC-134a, HFC-245fa, and HFC-365mfc have been used. However, although these hydrofluorocarbon-based foaming agents are recognized as being alternative fluorocarbon which causes less or no ozone layer depletion, hydrofluorocarbon-based foaming agents, which are chemically stable, have high global warming potential. Thus, there is a concern that use of the HFC-based foaming agent leads to global warming, and a reduction in the HFC-based foaming agent has been stepwisely proceeded by the Montreal Protocol (Kigali revision).

In light of these circumstances, halogenated hydroolefin-based foaming agents, called a hydrofluoroolefin (HFO), which have low global warming potential due to their chemically unstable property, are beginning to be used recently in place of these HFC-based foaming agents.

JP 2016-74886 A (Patent Literature 1) describes an invention related to a polyol composition for a rigid polyurethane foam containing, as a foaming agent component, 1-chloro-3,3,3-trifluoropropene (HFO-1233zd) serving as an essential component. The invention described in Patent Literature 1 aims to provide a polyol composition for a rigid polyurethane foam that has a good storage stability of a stock solution even in a case of using HFO-1233zd as a foaming agent component and that further can prevent decrease in the physical properties of the rigid polyurethane foam, the polyol composition containing ethyl diglycol acetate as a compatibilizer for the HFO-1233zd.

Further, although not characterized in use of the HFO as a foaming agent, JP 2019-533754 A (Patent Literature 2) aims to provide a polyol composition that is stable in any states, specifically, a polyol composition that is stable for at least 24 hours, or stable over 6 months in some cases in order to solve a problem that a polyol composition used as a raw material of a polyurethane foam tends to be phase-separated over time. The polyol composition described in Patent Literature 2 contains two or more polyols and an ethoxylated alcohol represented by a formula: $RO(CH_2CH_2O)_nH$ where R is a C1 to C31 linear or branched alkyl, and n is an integer of 1 or more, and having a hydrophilic-lipophilic balance (HLB) of about 3.7 or more.

Citation List

Patent Literature

    Patent Literature 1: JP 2016-74886 A
    Patent Literature 2: JP 2019-533754 A

Summary of Invention

Technical Problem

The present inventor studied use of a hydrofluoroolefin (HFO) as a foaming agent for a polyurethane foam, and found that, in a case where a polyurethane foam and a surface material are integrally formed, the smoothness of the surface material of the resulting formed article is inferior to a case of another foaming agent, leading to a problem of deterioration of the surface quality.

Thus, an object of the present invention is to solve the above problem of the conventional art, and provide a composition for forming a polyurethane foam having excellent surface quality of a formed article, in particular, a polyurethane foam having excellent smoothness. Further, another object of the present invention is to provide a polyurethane foam formed form the composition, and a thermal insulating material comprising the foam.

Solution to Problem

The present inventors confirm that use of a hydrofluoroolefin (HFO) as a foaming agent causes shrinkage of a polyurethane foam, and consider that such shrinkage tends to deteriorate the smoothness of the surface material.

A process of forming a polyurethane foam generally includes (1) foaming via a reaction of a polyisocyanate and water; and (2) forming a urethane bond via a reaction of a polyisocyanate and a polyol, and the reactions start in this order. In a case of using an HFO as a foaming agent, the HFO volatiles through the foaming in above (1) before gas bubbles are generated, thus causing shrinkage of the polyurethane foam.

In light of the above, the present inventors made diligent studies to achieve the above object, and found that a polyurethane foam having excellent smoothness of a surface material can be formed by using a compound represented by Formula 1: $RO(CH_2CH_2O)_nR$, where R is a C1 to C3 linear or branched alkyl, and n is an integer of 1 or more, in a composition for forming a polyurethane foam containing an HFO as a foaming agent, and thus accomplished the present invention.

That is, the composition of the present invention is a composition for forming a polyurethane foam, in which the composition contains a hydrofluoroolefin as a foaming agent, and the composition contains 0.2 to 6 parts by mass of at least one compound represented by Formula 1 below relative to 100 parts by mass of the composition:

$$RO(CH_2CH_2O)_nR \qquad \text{(Formula 1)}$$

where R is a C1 to C3 linear or branched alkyl, and n is an integer of 1 or more.

In a preferred example of the composition of the present invention, the composition contains 25 parts by mass or more of a polyether polyol relative to 100 parts by mass of the composition.

In another preferred example of the composition of the present invention, the composition has an isocyanate index of 150 or less.

In another preferred example of the composition of the present invention, the viscosity of polyol contained in the composition is 500 mPas (25°C) or more.

Further, the polyurethane foam of the present invention is a polyurethane foam formed by foaming the composition.

In a preferred example of the polyurethane foam of the present invention, the polyurethane foam is a polyurethane foam with a surface material.

Further, the thermal insulating material of the present invention is a thermal insulating material comprising the polyurethane foam.

Advantageous Effects of Invention

According to the composition of the present invention, it is possible to provide a composition for forming a polyurethane foam having excellent surface quality of a formed article, in particular, a polyurethane foam having excellent smoothness. According to the polyurethane foam of the present invention, it is possible to provide a polyurethane foam formed from such a composition. According to the thermal insulating material of the present invention, it is possible to provide a thermal insulating material comprising such a polyurethane foam.

Description of Embodiments

Hereinafter, the present invention will be described in detail.

One aspect of the present invention is a composition for forming a polyurethane foam. Such a composition contains a polyol, a polyisocyanate, and a foaming agent. Mixing of these components promotes a reaction of the polyol and polyisocyanate, thus enabling formation of a polyurethane foam. In the present specification, the composition for forming a polyurethane foam of the present invention is also referred to as "composition of the present invention".

The polyol is a compound having a plurality of hydroxy groups, and is preferably a polymeric polyol. Specific examples of the polyol include a polyether polyol, a polyester polyol, a polycarbonate polyol, a polylactone polyol, a polybutadiene polyol, a polymer polyol, and a Mannich polyol.

In the composition of the present invention, the amount of the polyol is appropriately adjusted depending on the amount of the polyisocyanate. For example, the amount of the polyol is 25 to 40 parts by mass relative to 100 parts by mass of the composition. The polyol may be used alone, or two or more types thereof may be used in combination.

Representative examples of the polyether polyol include polyoxyalkylene polyols. The polyoxyalkylene polyol can be produced by subjecting, for example, a compound having two or more active hydrogen-containing groups such as hydroxy groups, primary amino groups, secondary amino groups, and other active hydrogen-containing groups, as a starting raw material, to a ring-opening addition reaction with an alkylene oxide.

Example of the starting raw material of the polyoxyalkylene polyol include polyhydric alcohols such as ethylene glycol, diethylene glycol, propylene glycol, dipropylene glycol, 1,4-butanediol, 1,6-hexanediol, neopentyl glycol, glycerin, trimethylol propane, pentaerythritol, diglycerin, mannose, sucrose, fructose, dextrose, and sorbitol; alkanolamines such as ethanolamine, diethanolamine, triethanolamine, and methyldiethanolamine; polyvalent amines such as ethylenediamine, tolylenediamine, diethyltoluenediamine, 1,3-propanediamine, 1,6-hexanediamine, isophoronediamine, diethylenetriamine, and triethylenepentaamine; polyhydric phenols such as bisphenol A, bisphenol F, resorcinol, and hydroquinone; and modified products thereof. These starting raw materials may be used alone, or two or more types thereof may be used in combination.

Examples of the alkylene oxide to cause a ring-opening addition reaction in the production of the polyoxyalkylene polyol include ethylene oxide, propylene oxide, 1,2-butylene oxide, 2,3-butylene oxide, and styrene oxide. These alkylene oxides may be used alone, or two or more types of thereof may be used in combination.

Examples of the polymer polyol include polymer polyols in which polymer fine particles such as polyacrylonitrile fine particles and polystyrene fine particles are dispersed in a polyoxyalkylene polyol. The polymer polyol comprises a polyoxyalkylene polyol, and thus is one type of polyether polyol.

The Mannich polyol can be produced by subjecting phenols, aldehydes, alkanolamines, or the like to a condensation reaction, and, as necessary, further performing a ring-opening addition reaction of an alkylene oxide such as ethylene oxide and propylene oxide. The Mannich polyol has a plurality of ether bonds in the molecule, and thus is one type of polyether polyol.

Preferred examples of the polyether polyol include polyoxyalkylene polyols such as (di)ethylene glycol-based polyether polyol, (di)propylene glycol-based polyether polyol, (di)glycerin-based polyether polyol, trimethylolpropane-based polyether polyol, pentaerythritol-based polyether polyol, sucrose-based polyether polyol, dextrose-based polyether polyol, sorbitol-based polyether polyol, mono(di, tri)ethanolamine-based polyether polyol, ethylenediamine-based polyether polyol, triethylenediamine-based polyether polyol, and bisphenol A-based polyether polyol which are obtained via an addition reaction of ethylene oxide and/or propylene oxide; polymer polyols in which polymer fine particles are dispersed in a polyoxyalkylene polyol, and a Mannich polyol.

The polyester polyol can be produced by adjusting the production condition of a polyester. Examples of the polyester polyol include a polyester polyol having a hydroxy group at least both terminals in the main chain. More specific examples of the polyester polyol include a straight-chain polyester polyol and a polyester polyol slightly branched. The polyester polyol can be prepared by using an aliphatic, alicyclic, or aromatic dicarboxylic acid, a diol, an optional polyvalent carboxylic acid and/or a trifunctional or more polyol by a known method.

The polylactone polyol is a homopolymer or a copolymer of lactone, and examples of the polylactone polyol include a polylactone having a hydroxy group at at least both terminals in the main chain. Specifically, the polylactone polyol can be produced by using, as a starting raw material, for example, a compound having two or more active hydrogen-containing groups as described in the above polyoxyalkylene polyol, and subjecting a lactone such as ε-caprolactone, β-butyrolactone, γ-butyrolactone, γ-valerolactone, δ-valerolactone to a ring-opening addition reaction. The polylactone polyol has a plurality of ester bonds in the molecule, and thus is one type of polyester polyol.

The polycarbonate polyol can be produced by adjusting the production condition of a polycarbonate. Examples of the polycarbonate polyol include a polycarbonate having a hydroxy group at at least both terminals in the main chain. Further, examples of the polybutadiene polyol include a polybutadiene having a hydroxy group at least both terminals in the main chain.

The composition of the present invention preferably contains a polyether polyol as the polyol. The amount of the polyether polyol is preferably 25 parts by mass or more, more preferably 25 to 40 parts by mass, and even more preferably 30 to 35 parts by mass relative to 100 parts by mass of the composition of the present invention. In a case of using a polyether polyol, in particular, a polyether polyol that exhibits a relatively hydrophilic property and has a high hydroxyl value in a specific amount described above, the effects of the compound represented by Formula 1 described later tend to be exhibited.

In the composition of the present invention, the hydroxyl value of the polyol is preferably 200 to 500 mgKOH/g, and even more preferably 300 to 400 mgKOH/g.

In the present specification, the hydroxyl value refers to the number of mg of sodium hydroxide required for neutralization of free hydroxyl groups that have been completely acetylated with carboxylic anhydride (for example, phthalic anhydride or acetic anhydride) in 1 g of a sample (see, JIS K 1557 2007).

In the composition of the present invention, the molecular weight of the polyol is preferably 400 to 800 g/mol, and more preferably 500 to 600 g/mol.

In the present specification, the molecular weight of the polyol is the number average molecular weight measured by gel permeation chromatography in terms of polystyrene.

In the composition of the present invention, the number of functional groups (fn) of the polyol is preferably 2.5 to 4.5, and even more preferably 3.0 to 4.0.

In the present specification, the number of functional groups (fn) per polyol molecule is determined from the hydroxyl value (OHV) and the number average molecular weight (Mn) of the polyol by the following calculation formula.

$$\text{fn} = \text{Mn(g/mol)} \times \text{OHV(mgKOH/g)}/56100$$

The viscosity of the polyol contained in the composition of the present invention is preferably 500 mPas (25°C) or more, more preferably 600 to 3,000 mPas (25°C), and even more preferably 700 to 2,000 mPas (25°C). When the viscosity of the polyol contained in the composition of the present invention is less than 500 mPas (25°C), the composition is scattered during application, thus causing defects of the foam in some cases. The viscosity of the polyol can be easily increased by, for example, using an aromatic amine polyether polyol.

In the present specification, the measurement of the viscosity is performed in accordance with JIS K 7117-1:1999, and a Brookfield rotational viscometer (B-type) is used.

In a case where the composition of the present invention contains a plurality of polyols, the viscosity of the polyol is the viscosity of the entire polyol. For example, the viscosity can be determined from the viscosity and the mass fraction of each polyol.

[Viscosity of polyol]

In a case where the polyol contained in the composition of the present invention is composed of n types of polyols, the viscosities of polyols are respectively defined as $V^1$, $V^2$,..., and $V^n$, and the mass fractions of polyols in the entire polyol are respectively defined as $W^1$, $W^2$,..., and $W^n$. The viscosity is determined by the following equation.

$$\text{Viscosity of polyol} = \exp(W^1 \times \ln(V^1) + W^2 \times \ln(V^2) + \cdots + W^n \times \ln(V^n))$$

The polyisocyanate is a compound having a plurality of isocyanate groups. Examples of the polyisocyanate include aliphatic, alicyclic, aromatic, or aromatic-aliphatic polyisocyanates. The polyisocyanate include modified products of these polyisocyanates. Examples of the modified product of a polyisocyanate include polyisocyanates having a structure such as uretdione, isocyanurate, urethan, urea, allophanate, biuret, carbodiimide, iminooxadiazinedione, oxadiazinetrione, and oxazolidone. As the polyisocyanate, an isocyanate group-containing prepolymer obtained by reacting a polyol and a polyisocyanate may also be used. The polyisocyanate may be used alone, or two or more types thereof may be used in combination.

Among polyisocyanates, examples of the aromatic polyisocyanate include phenylene diisocyanate, tolylene diisocyanate, xylylene diisocyanate, diphenylmethane diisocyanate, dimethyldiphenylmethane diisocyanate, triphenylmethane triisocyanate, naphthalene diisocyanate, and polymethylene polyphenyl polyisocyanate. Examples of the alicyclic polyisocyanate include cyclohexylene diisocyanate, methylcyclohexylene diisocyanate, isophorone diisocyanate, dicyclohexylmethane diisocyanate, and dimethyldicyclohexylmethane diisocyanate. Examples of the aliphatic polyisocyanate include methylene diisocyanate, ethylene diisocyanate, propylene diisocyanate, tetramethylene diisocyanate, and hexamethylene diisocyanate.

The polyisocyanate preferably has an isocyanate group content of 20 to 40 mass%, and even more preferably 25 to 35 mass%. In the present specification, the isocyanate group content is determined in accordance with JIS K 1603-1:2007.

In the composition of the present invention, the amount of the polyisocyanate can be indicated by, for example, the isocyanate index. In the composition of the present invention, the isocyanate index is preferably set to low from the viewpoint of the thermal insulating property of the polyurethane foam. Specifically, the isocyanate index is preferably 150 or less, more preferably 90 to 150, even more preferably 90 to 130, and particularly preferably 100 to 125.

In the present specification, the isocyanate index is a value obtained by multiplying the ratio of the isocyanate group of the polyisocyanate to the total of active hydrogen, which reacts with the isocyanate group, of the polyol, foaming agent, and the like by 100.

The foaming agent is generally classified into a physical foaming agent and a chemical foaming agent. The foaming agent may be used alone, or two or more types thereof may be used in combination. The physical foaming agent and the chemical foaming agent may be used in combination. The amount of the foaming agent is preferably 0.5 to 15 parts by mass, and more preferably 3 to 12 parts by mass relative to 100 parts by mass of the composition of the present invention.

Specific examples of the physical foaming agent include fluorocarbons such as a hydrochlorofluorocarbon (HCFC) and a hydrofluorocarbon (HFC); hydrofluoroolefin (HFO), hydrocarbons such as heptane, hexane, pentane,

EP 4 011 929 A1

and cyclopentane, and carbon dioxide. Meanwhile, examples of the chemical foaming agent include water, and carboxylic acids such as formic acid, and acetic acid.

The composition of the present invention contains hydrofluoroolefin as a foaming agent. The hydrofluoroolefin (HFO) is a foaming agent suitably used as a physical foaming agent that does not correspond to fluorocarbons. The HFO is an olefin compound containing a fluorine atom, and includes an HFO further containing a halogen atom other than the fluorine atom (for example, a chlorine atom). Among the HFOs, an HFO further containing a chlorine atom is also referred to as "hydrochlorofluoroolefin (HCFO)". The composition of the present invention preferably contains a hydrochlorofluoroolefin. Note that the HFO and the HCFO are distinguished in some cases, but in the present specification, the HFO includes the HCFO as described above.

The number of carbon atoms of the hydrofluoroolefin is preferably 2 to 5. The number of fluorine atoms of the hydrofluoroolefin is preferably 3 to 7. The molecular weight of the HFO is preferably 100 to 200 g/mol. Specific examples of the HFO include 1,2,3,3,3-pentafluoropropene, 1,3,3,3-tetrafluoropropene, 2,3,3,3-tetrafluoropropene, 1,2,3,3-tetrafluoropropene, 3,3,3-trifluoropropene, 1,1,1,4,4,4-hexafluorobutene, 1-chloro-3,3,3-trifluoropropene, 2-chloro-3,3,3-trifluoropropene, 3,3-dichloro-3-fluoropropene, 2-chloro-1,1,1,4,4,4-hexafluorobutene, and 2-chloro-1,1,1,3,4,4,4-heptafluorobutene. The HFO may be any of a cis-isomer and a trans-isomer. These HFOs may be used alone, or two or more types thereof may be used in combination.

The amount of the hydrofluoroolefin is, for example, 0.5 to 15 parts by mass, and preferably 3 to 12 parts by mass relative to 100 parts by mass of the composition of the present invention.

The composition of the present invention preferably contains water as a foaming agent from the viewpoint of improving the appearance and strength of the foam. The amount of the water is, for example, 0.2 to 10 parts by mass, and preferably 0.5 to 3 parts by mass relative to 100 parts by mass of the composition of the present invention.

The composition of the present invention contains at least one compound represented by Formula 1 below.

$$RO(CH_2CH_2O)_nR \qquad \text{(Formula 1)}$$

where R is a C1 to C3 linear or branched alkyl, and n is an integer of 1 or more.

The composition of the present invention preferably contains a polyether polyol. The polyether polyol has a hydrophilic property which is easily dissolved in water due to its structure. Thus, as the reaction of the polyol and polyisocyanate proceeds, a hydrophobic structure is formed, but hydrophilicity is maintained in a certain level.

Meanwhile, the hydrofluoroolefin (HFO) as a foaming agent is hydrophobic, and thus moves to the hydrophobic side in the process of the reaction of the polyol and polyisocyanate. The HFO also volatiles with a gradual increase in the reaction heat. However, a large number of hydrophilic structures such as polyether polyol preclude dissolving of the HFO, and thus the HFO instantly volatiles in the initial stage of the reaction. The instant volatilization of the HFO softens resin at a specific site due to high solubility of the HFO in the resin. Such softness of resin presumably causes shrinkage of the foam, and thus deteriorates the smoothness of the surface of the surface material.

The compound represented by Formula 1 above is relatively hydrophobic. The compound can therefore control dissolving of the HFO in resin obtained from a raw material containing a hydrophilic polyether polyol, for example, and can solve the problem of softness of resin at a specific site.

In Formula 1 above, R is a C1 to C3 linear or branched alkyl. Specific examples of the alkyl include methyl, ethyl, and propyl (normal propyl, isopropyl). Two R's in Formula 1 may be the same or different.

In Formula 1 above, n is an integer of 1 or more, preferably an integer of 1 or more and 12 or less, and even more preferably an integer of 5 or more and 10 or less.

The amount of the compound represented by Formula 1 above is preferably 0.2 to 6 parts by mass, and preferably 0.5 to 3 parts by mass relative to 100 parts by mass of the composition of the present invention. An excessive amount of the compound represented by Formula 1 above tends to cause the compound to be present on the surface and also reduces combustibility performance, resulting in a combustible composition.

The composition of the present invention preferably contains a catalyst. Examples of the catalyst include a catalyst for promoting a reaction of water and a polyisocyanate (foaming catalyst), a catalyst for promoting a reaction of a polyol and a polyisocyanate (resinification catalyst), and a catalyst for promoting a trimerization reaction of a polyisocyanate (i.e., formation of an isocyanurate ring) (trimerization catalyst).

Examples of the foaming catalyst include dimorpholine-2,2-diethylether, N,N,N',N",N"-pentamethyldiethylenetriamine, bis(dimethylaminoethyl)ether, 2-(2-diethylaminoethoxy)ethanol, and N,N,N'-trimethyl-N'-hydroxyethyl-bisaminoethyl ether.

Examples of the resinification catalyst include amine catalysts such as triethylenediamine, N,N-dimethylcyclohexylamine, N,N,N',N'-tetramethylethylenediamine, N,N,N',N",N"',N"'-hexamethyltriethylenetetramine, N-dimethylaminoethyl-N'-methylpiperazine, N,N,N',N'-tetramethylhexamethylenediamine, 1,2-dimethylimidazole, 1-isobutyl-2-methylimidazole, N,N-dimethylaminopropylamine, and bis(dimethylaminopropyl)amine; alkanol amine catalysts such as N,N-dimethylaminoethanol, N,N,N'-trimethylaminoethylethanolamine, N-(3-dimethylaminopropyl)-N,N-diisopropanolamine, N-(2-hydroxyethyl)-N'-methylpiperazine, N,N-dimethylaminohexanol, and 5-dimethylamino-3-methyl-1-pentanol; and metal catalysts such as stannous octanoate, stannic dibutyl dilaurate, lead octylate, bismuth carboxylate, and a zirconium complex. As these amine catalysts and alkanolamine catalysts, amine carbonates synthesized by adding carbonic acid, and amine carboxylic acid salts synthesized by adding carboxylic acid such as formic acid, and acetic acid may be used.

Examples of the trimerization catalyst include aromatic compounds such as 2,4,6-tris(dialkylaminoalkyl)hexahydro-S-triazine, 1,3,5-tris(N,N-dimethylaminopropyl)hexahydro-S-triazine, 2,4,6-tris(dimethylaminomethyl)phenol, and 2,4-bis(dimethylaminomethyl)phenol; carboxylic acid alkali metal salts such as potassium acetate, potassium 2-ethylhexanoate, and potassium octylate; and quaternary ammonium salts of carboxylic acid or other onium salts.

The amount of the catalyst is, for example, 0.1 to 5 parts by mass, and preferably 0.3 to 1.5 parts by mass relative to 100 parts by mass of the composition of the present invention. The catalyst may be used alone, or two or more types thereof may be used in combination.

The composition of the present invention may contain a foam stabilizer. The foam stabilizer is preferably a surfactant. The surfactant includes ionic surfactants such as an anionic surfactant, a cationic surfactant, and an amphoteric surfactant; and nonionic surfactants. The surfactant is preferably a nonionic surfactant. Preferred specific examples of the surfactant include silicone-based surfactants and fluorine-based surfactants. The amount of the foam stabilizer is preferably 1 to 5 parts by mass relative to 100 parts by mass of the composition of the present invention. The foam stabilizer may be used alone, or two or more types thereof may be used in combination.

The composition of the present invention may contain a flame retardant. The flame retardant is preferably a phosphorus-based flame retardant. Preferred specific examples of the phosphorus-based flame retardant include tricresyl phosphate (TCP), triethyl phosphate (TEP), tris(β-chloroethyl)phosphate (TCEP), and tris(β-chloropropyl)phosphate (TCPP). Further, solid (powder) flame retardants such as ammonium polyphosphate and amorphous phosphorus are used as necessary. The amount of the flame retardant is preferably 3 to 15 parts by mass relative to 100 parts by mass of the composition of the present invention. The flame retardant may be used alone, or two or more types thereof may be used in combination.

The composition of the present invention may appropriately contain, as other components, additives such as a coloring agent, a filler, an antioxidant, an ultraviolet absorbent, a thermal stabilizer, a photostabilizer, a plasticizer, an antifungal agent, an antibacterial agent, a crosslinking agent, a solvent, a viscosity reducing agent, a pressure reducing agent, and a separation preventing agent, as necessary. Commercially available products can be suitably used for these components.

The composition of the present invention can be prepared by mixing various components appropriately selected as necessary. For example, the composition of the present invention can be prepared by mixing a polyol component containing a polyol and a polyisocyanate component composed of a polyisocyanate.

The composition of the present invention is constituted by a stock solution containing a pair of a polyol component and a polyisocyanate component in many cases. The polyol component contains a polyol, and usually contains a foaming agent, a foam stabilizer, a catalyst. The polyol component may also contain a flame retardant or an additional additive. The polyisocyanate component is composed of a polyisocyanate, and may also contain additives such as a foaming agent and a flame retardant. The foaming agent may be compounded during mixing of the polyol component and the polyisocyanate component.

Another aspect of the present invention is a polyurethane foam. The polyurethane foam of the present invention is obtained by foaming the composition for forming a polyurethane foam of the present invention described above. The composition of the present invention contains a polyol and a polyisocyanate. Thus, mixing of both components promotes reaction, thus enabling formation of a polyurethane foam. The temperature at the time of forming the polyurethane foam is preferably 20 to 80°C.

The method for foaming the polyurethane foam is not particularly limited. Known foaming means, for example, hand mixing foaming, simple foaming, an injection method, a froth injection method, and a spraying method can be utilized. The method for forming a polyurethane foam is not particularly limited, and known forming means such as mold forming, slab forming, laminate forming, and on-site foam forming can be utilized.

The polyurethane foam of the present invention can be used for various applications such as marine vessels, vehicles, plants, thermal insulating devices, building, civil engineering, furniture, and interior decorations. The polyurethane foam of the present invention can be suitably used for thermal insulating materials, specifically, thermal insulating devices, for example, thermal insulating members of cold storage warehouses and freezing storage warehouses.

The polyurethane foam of the present invention is preferably a polyurethane foam with a surface material, and even more preferably a polyurethane foam with a metal surface material. In the present specification, the polyurethane foam with a surface material is a plate-shaped composite material in which a surface material such as a foil or a plate is attached to one surface or both surfaces of a polyurethane foam. The polyurethane foam with a surface material can be used as a thermal insulating material for various applications.

Preferred examples of an adherend such as a surface material include metals and other inorganic materials.

In particular, examples of the adherend include aluminum and alloys thereof, stainless steel and alloys thereof, iron and alloys thereof, and copper and alloys thereof. For the surface of the adherend, a surface to which the composition of the present invention is attached may be subjected to coating as desired. Examples of the coating include organic polymer coating agents such as polyester resin. The thickness of the adherend is preferably 0.2 to 0.6 mm.

The density of the polyurethane foam of the present invention is, for example, 5 to 80 kg/m$^3$, preferably 25 to 70kg/m$^3$, and even more preferably 40 to 65 kg/m$^3$. In the present specification, the density of the polyurethane foam is measured in accordance with JIS K 7222:2005.

In the polyurethane foam of the present invention, in a case where the central temperature in the measurement is 23°C, the thermal conductivity is preferably 0.0185 to 0.0280 W/m·K, and even more preferably 0.0190 to 0.0260 W/m·K. In the present specification, the thermal conductivity is measured in accordance with JIS A 1412-2:1999.

The polyurethane foam of the present invention is suitably applied to various applications that require a thermal insulating property. In particular, the polyurethane foam of the present invention can be advantageously utilized as building materials and thermal insulating materials used for multiple dwelling houses such as apartments, detached houses, various facilities including school building and commercial building, freezing storage warehouses, bathtubs, pipe arrangement in the factory, automobiles, and railway vehicles.

Further, the polyurethane foam of the present invention can also be used in the production of on-site application type thermal insulating materials and dew condensation preventing materials used by a spraying method, and building materials such as a panel and a board in the factory line. According to an embodiment of the present invention, the polyurethane foam is a spray-applied rigid urethane foam for thermal insulation specified in JIS A 9526:2017.

Another aspect of the present invention is a thermal insulating material. The thermal insulating material of the present invention is a thermal insulating material comprising the polyurethane foam of the present invention described above. Examples of the thermal insulating material include thermal insulating members, for example, thermal insulating devices of cold storage warehouses and freezing storage warehouses. The thermal insulating material of the present invention can be used for multiple dwelling houses such as apartments, detached houses, various facilities including school building and commercial building, freezing storage warehouses, bathtubs, pipe arrangement in the factory, automobiles, and railway vehicles.

Examples

Hereinafter, the present invention will be further described in detail with reference to Examples. However, the present invention is not limited to the following Examples.

1. Outline

A mixed solution prepared by mixing a polyol, a foaming agent, and the like (polyol component) and a polyisocyanate are mixed at a predetermined compounding ratio, and then injected into a mold including metal surface materials disposed on the top and bottom of the mold at a constant temperature and pressure by using a high-pressure foaming machine, thus preparing a polyurethane foam. The depth of a part around the injection portion of the lower surface of the polyurethane foam after a lapse of a predetermined time is measured.

2. Apparatus and device

High-pressure foaming machine (HK-650P, available from Hennecke)
Disposable chopsticks
Stopwatch (having a function of measuring a lap time)
Mold (made of aluminum, inside dimensions: length: 2,000 mm, width: 900 mm, thickness: 100 mm)

3. Materials

1) Polyol

Polyol A: polyether polyol [SBU polyol 0517: available from Sumika Covestro Urethane Co., Ltd.], number of functional groups: 4.1, hydroxyl number: 480 mgKOH/g, viscosity: 3,400 mPa·s (25°C)
Polyol B: polyether polyol [SBU polyol 0487: available from Sumika Covestro Urethane Co., Ltd.], number of functional groups: 4, hydroxyl value: 410 mgKOH/g, viscosity: 1,500 mPa·s (25°C)

Polyol C: aromatic amine-based polyether polyol [SBU polyol Z450: available from Sumika Covestro Urethane Co., Ltd.], number of functional groups: 4, hydroxyl value: 340 mgKOH/g, viscosity: 12,000 mPa·s (25°C)

Polyol D: polyether polyol [SBU polyol S429: available from Sumika Covestro Urethane Co., Ltd.], number of functional groups: 3, hydroxyl value: 250 mgKOH/g, viscosity: 230 mPa·s (25°C)

2) Polyisocyanate

Polyisocyanate: Polymeric MDI [SUMIDULE 44V20 L: available from Sumika Covestro Urethane Co., Ltd.], isocyanate group content: 31.5 mass%

3) Foaming agent

Foaming agent A: water
Foaming agent B: HCFO-1233zd (molecular weight: 130)
Foaming agent C: HFO-1224yd (molecular weight: 148.5)
Foaming agent D: HFO-1336mzz (Z)(molecular weight: 164)

4) Compatibilizer

Compatibilizer A: diethylene glycol dimethyl ether, molecular weight: 134, viscosity: 1 mPa·s (25°C)
Compatibilizer B: tetraethylene glycol dimethyl ether, molecular weight: 222, viscosity: 4 mPa·s (25°C)
Compatibilizer C: polyoxyethylene dimethyl ether [Uniox MM-400: available from NOF Corporation], average molecular weight: 400, viscosity 100 mPa·s (25°C)
Compatibilizer D: diethylene glycol monobutyl ether, molecular weight: 162, hydroxyl value: 346, viscosity 6 mPa·s (25°C)
Compatibilizer E: ethyl diglycol acetate, molecular weight: 176, viscosity: 2.5 mPa·s (25°C)

4) Other additives

Catalyst A: dimorpholine-2,2-diethylether
Catalyst B: 1,2-dimethylimidazole (70 mass%) + diethylene glycol (30 mass%)
Foam stabilizer: silicone-based nonionic surfactant [TEGOSTAB B8460: available from Evonik Japan Co., Ltd.]
Flame retardant: tris(2-chloroisopropyl)phosphate

5) Surface material

Aluminum surface material

3. Method

<Preparation of polyol component>

1) Predetermined amounts of various polyols and catalysts and the like are introduced into a mixing tank purged with nitrogen and then mixed.
2) The contents are stirred for 30 minutes or more, and whether the contents have been sufficiently stirred is visually confirmed.
3) A predetermined amount of a foaming agent is added to the mixed solution confirmed in 2), and then the contents are sufficiently mixed. After the mixing, a foaming agent that has been weighed and reduced in amount is added, and the contents are mixed again.

Tables 1 and 2 show the formulation of polyol components (parts by mass)

<Production of polyurethane foam>

[0094]

　　4) Using a high-pressure foaming machine HK-650P, available from Hennecke, the temperatures of polyol components and polyisocyanate components were adjusted to 19 to 23°C, and urethane injection forming was then performed at an injection pressure of 12 MPa. Tables 1 and 2 show the mixing mass ratio of the polyol components and the polyisocyanate components.
　　5) A composition for forming a foam is injected into the center portion of a mold that has been heated to 40°C in advance and includes aluminum surface materials disposed on the top and bottom of the mold (inside dimensions: length: 2,000 mm, width: 900 mm, thickness: 100 mm).
　　6) The composition is injected in an amount such that the mold is not fully filled with the polyurethane foam in the lengthwise direction of the mold. Semicircular both ends of the polyurethane foam are cut off, thus sampling a rectangular parallelepiped. The weight and volume of the sample are measured, and the just density ($kg/m^3$) is calculated. The density of the sample filled in the mold refers to a just density.
　　7) The just weight of the mold (inside dimensions: length: 2,000 mm, width: 900 mm, thickness: 100 mm) is calculated from the just density. The composition is injected in an amount 1.25 times the calculated just weight, thus producing a polyurethane foam formed article.
　　8) 20 minutes after injection of the composition for forming a foam, a polyurethane foam formed article with a surface material is released from the mold.
　　9) After the polyurethane foam is released, the polyurethane foam is left to stand at 0°C within 30 minutes, and then left approximately 24 hours.
　　10) A linear scale is placed so as to be a right angle on the surface material on the lower surface side in which urethane has been injected. The maximum value of the gap between the linear scale and the surface material is measured by using a thickness gauge (Niigata Seiki Co., Ltd., 100ML) or a taper gauge (Niigata Seiki Co., Ltd., 270A). Tables 1 and 2 show the obtained results as "maximum recession of the injection lower surface".
　　11) An image of a fluorescent lamp reflected on the surface material of the lower surface side under the fluorescent lamp (straight tube type) was visually observed. The smoothness was evaluated by the following criteria. Tables 1 and 2 show the evaluation results.

(Evaluation criteria)

[0095]

　　◎ : Surface was smooth, and the image of the fluorescent lamp was observed as a straight line.
　　○: Surface was smooth, and the image of the fluorescent lamp was observed as a straight line, but the surface appeared to have a slight recess and protrusion.
　　✕: Surface was not smooth, and weaving of the image of the fluorescent lamp was observed.

<Measurement method of gelling time>

To confirm the reactivity of a composition for forming a foam, a mixed solution in an amount that does not overflow was injected into a 2L DESCUP at a predetermined temperature and pressure, and the mixed solution was touched with disposal chopsticks during injection. The time period until the mixed solution begins to form threads was measured as the gelling time (second). Tables 1 and 2 show the measurement results.

<Evaluation of combustibility>

Evaluation was performed by using a test piece with a size of 10 mm in thick ✕ 200 mm in length ✕ 25 mm in width in accordance with JIS A 9511:2017 based on the following criteria. The produced polyurethane foam was cut into a test piece with the size described above. The test piece was left to stand under the standard temperature condition, third class (23°C ± 5°C) and the standard humidity condition, third class (5 0$^{+20}$, $^{-10}$% R.H.) specified in JIS K 7100:1999. Measurement was performed one week after the production of the polyurethane foam. Tables 1 and 2 show the evaluation results.

(Evaluation criteria)

○ (pass): the test piece satisfies a criterion that flame is extinguished within 3 seconds with no occurrence of afterglow, and the test piece does not burn beyond a burning limit indication line.
× (fail): the test piece does not satisfy the above criterion of pass.

[Table 1]

| | | Comparative Example 1 | Example 1 | Example 2 | Example 3 | Example 4 | Comparative Example 2 | Example 5 | Example 6 | Comparative Example 3 | E Example 7 |
|---|---|---|---|---|---|---|---|---|---|---|---|
| Polyol component | Polyol A | 20 | 20 | 19 | 18 | 17 | 16 | 19 | 18 | 16 | 20 |
| | Polyol B | 40 | 39 | 38 | 36 | 34 | 32 | 38 | 36 | 32 | 39 |
| | Polyol C | 20 | 20 | 19 | 18 | 17 | 16 | 19 | 18 | 16 | 20 |
| | Polyol D | 20 | 19 | 19 | 18 | 17 | 16 | 19 | 18 | 16 | 19 |
| | Compatibilizer A | | 2 | 5 | 10 | 15 | 20 | | | | |
| | Compatibilizer B | | | | | | | 5 | 10 | 20 | |
| | Compatibilizer C | | | | | | | | | | 2 |
| | Compatibilizer D | | | | | | | | | | |
| | Compatibilizer E | | | | | | | | | | |
| | Foam stabilizer | 5 | 5 | 5 | 5 | 5 | 5 | 5 | 5 | 5 | 5 |
| | Flame retardant | 15 | 15 | 15 | 15 | 15 | 15 | 15 | 15 | 15 | 15 |
| | Catalyst A | 2 | 2 | 2 | 2 | 2 | 2 | 2 | 2 | 2 | 2 |
| | Catalyst B | 0.6 | 0.6 | 0.6 | 0.6 | 0.6 | 0.6 | 0.6 | 0.6 | 0.6 | 0.6 |
| | Foaming agent A | 2.5 | 2.5 | 2.5 | 2.5 | 2.5 | 2.5 | 2.5 | 2.5 | 2.5 | 2.5 |
| | Foaming agent B | 19.4 | 19.2 | 18.8 | 18.2 | 17.5 | 16.9 | 18.8 | 18.1 | 16.9 | 19.2 |
| | Foaming agent C | | | | | | | | | | |
| | Foaming agent D | | | | | | | | | | |
| Polyisocyanate component Polyisocyanate | | 152 | 150 | 147 | 142 | 136 | 131 | 147 | 141 | 131 | 150 |
| Isocyanate index | | 120 | 120 | 120 | 120 | 120 | 120 | 120 | 120 | 120 | 120 |

(continued)

| Mixing mass ratio (polyol component/polyisocyanate component) | | 100/105 | 100/104 | 100/102 | 100/99 | 100/95 | 100/92 | 100/102 | 100/98 | 100/92 | 100/104 |
|---|---|---|---|---|---|---|---|---|---|---|---|
| Reactivity | Gelling time (second) | 70 to 100 | 70 to 100 | 70 to 100 | 70 to 100 | 70 to 100 | 70 to 100 | 70 to 100 | 70 to 100 | 70 to 100 | 70 to 100 |
| Combustibility JIS A 9511 | Determination (○ or ×) | ○ | ○ | ○ | ○ | ○ | × | ○ | ○ | × | ○ |
| Maximum recession of injection lower surface (mm) | | 0.24 | 0.14 | 0.07 | 0.08 | 0.14 | 0.15 | 0.05 | 0.07 | 0.14 | 0.12 |
| Smoothness of lower surface | | × | ○ | ◎ | ◎ | ○ | ○ | ◎ | ◎ | ○ | ○ |
| Viscosity of polyol (mPa·s/25°C) | | 1730 | 1770 | 1730 | 1730 | 1730 | 1730 | 1730 | 1730 | 1730 | 1770 |

[Table 2]

| | | Example 8 | Example 9 | Example 10 | Comparative Example 4 | Comparative Example 5 | Comparative Example 6 | Comparative Example 7 | Example 11 | Comparative Example 8 | Example 12 |
|---|---|---|---|---|---|---|---|---|---|---|---|
| Polyol component | Polyol A | 19 | 18 | 17 | 16 | 19 | 19 | 20 | 19 | 20 | 19 |
| | Polyol B | 38 | 36 | 34 | 32 | 38 | 38 | 40 | 38 | 40 | 38 |
| | Polyol C | 19 | 18 | 17 | 16 | 19 | 19 | 20 | 19 | 20 | 19 |
| | Polyol D | 19 | 18 | 17 | 16 | 19 | 19 | 20 | 19 | 20 | 19 |
| | Compatibilizer A | | | | | | | | | | |
| | Compatibilizer B | | | | | | | | 5 | | 5 |
| | Compatibilizer C | 5 | 10 | 15 | 20 | | | | | | |
| | Compatibilizer D | | | | | 5 | | | | | |
| | Compatibilizer E | | | | | | 5 | | | | |
| | Foam stabilizer | 5 | 5 | 5 | 5 | 5 | 5 | 5 | 5 | 5 | 5 |
| | Flame retardant | 15 | 15 | 15 | 15 | 15 | 15 | 15 | 15 | 15 | 15 |
| | catalyst A | 2 | 2 | 2 | 2 | 2 | 2 | 2 | 2 | 2 | 2 |
| | catalyst B | 0.6 | 0.6 | 0.6 | 0.6 | 0.6 | 0.6 | 0.6 | 0.6 | 0.6 | 0.6 |
| | Foaming agent A | 2.5 | 2.5 | 2.5 | 2.5 | 2.5 | 2.5 | 2.5 | 2.5 | 2.5 | 2.5 |
| | Foaming agent B | 18.8 | 18.2 | 17.5 | 16.9 | 19.4 | 18.8 | | | | |
| | Foaming agent C | | | | | | | | 22.2 | 21.5 | |
| | Foaming agent D | | | | | | | | | 24.6 | 23.9 |

(continued)

| | | Example 8 | Example 9 | Example 10 | Comparative Example 4 | Comparative Example 5 | Comparative Example 6 | Comparative Example 7 | Example 11 | Comparative Example 8 | Example 12 |
|---|---|---|---|---|---|---|---|---|---|---|---|
| Polyisocyanate component | Polyisocyanate | 147 | 142 | 136 | 131 | 152 | 147 | 152 | 147 | 152 | 147 |
| Isocyanate index | | 120 | 120 | 120 | 120 | 120 | 120 | 120 | 120 | 120 | 120 |
| Mixing mass ratio (polyol component/ polyisocyanate component) | | 100/102 | 100/99 | 100/95 | 100/92 | 100/105 | 100/102 | 100/103 | 100/100 | 100/102 | 100/99 |
| Reactivity | Gelling time (second) | 70 to 100 | 70 to 100 | 70 to 100 | 70 to 100 | 70 to 100 | 70 to 100 | 70 to 100 | 70 to 100 | 70 to 100 | 70 to 100 |
| Combustibility JIS A 9511 | Determination (○ or ×) | ○ | ○ | ○ | × | ○ | ○ | ○ | ○ | ○ | ○ |
| Maximum recession of injection lower surface (mm) | | 0.03 | 0.05 | 0.10 | 0.11 | 0.24 | 0.26 | 0.20 | 0.05 | 0.17 | 0.03 |
| Smoothness of lower surface | | ◎ | ◎ | ○ | ○ | × | × | × | ◎ | × | ◎ |
| Viscosity of polyol (mPa·s/25°C) | | 1730 | 1730 | 1730 | 1730 | 1730 | 1730 | 1730 | 1730 | 1730 | 1730 |

Tables 1 and 2 show that the polyurethane foams of Examples have excellent surface quality of a formed article compared to Comparative Examples 1 and 5 to 8. Tables 1 and 2 also show that the polyurethane foams of Comparative Examples 2 to 4, in which the used amount of the compound represented by Formula 1 was too large, exhibit poor combustibility.

**Claims**

1. A composition for forming a polyurethane foam, wherein
   the composition comprises a hydrofluoroolefin as a foaming agent, and
   the composition comprises 0.2 to 6 parts by mass of at least one compound represented by Formula 1 below relative to 100 parts by mass of the composition:

$$RO(CH_2CH_2O)_nR \qquad \text{(Formula 1)}$$

   where R is a C1 to C3 linear or branched alkyl, and n is an integer of 1 or more.

2. The composition according to claim 1, wherein the composition comprises 25 parts by mass or more of a polyether polyol relative to 100 parts by mass of the composition.

3. The composition according to claim 1 or 2, wherein the composition has an isocyanate index of 150 or less.

4. The composition according to any one of claims 1 to 3, wherein the viscosity of polyol contained in the composition is 500 mPas (25°C) or more.

5. A polyurethane foam formed by foaming the composition according to any one of claims 1 to 4.

6. The polyurethane foam according to claim 5, which is a polyurethane foam with a surface material.

7. A thermal insulating material comprising the polyurethane foam according to claim 5 or 6.

Europäisches Patentamt

European Patent Office

Office européen des brevets

# EUROPEAN SEARCH REPORT

Application Number

EP 20 21 3852

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JP 2016 074886 A (TOYO TIRE & RUBBER CO) 12 May 2016 (2016-05-12) * claim 1; examples 1-7 * | 1-7 | INV. C08G18/76 C08J9/14 C08J9/00 B32B15/04 B32B15/20 C08G18/48 |
| A | WO 2018/022612 A1 (HONEYWELL INT INC [US]) 1 February 2018 (2018-02-01) * paragraph [0011] * | 1-7 | |
| A | WO 2010/098936 A1 (DU PONT [US]; LOH GARY [US]; CREAZZO JOSEPH ANTHONY [US]) 2 September 2010 (2010-09-02) * examples 1-3 * | 1-7 | |
| A | WO 2008/041347 A1 (NIPPON POLYURETHANE KOGYO KK [JP]; SUGANO AKIRA [JP] ET AL.) 10 April 2008 (2008-04-10) * claim 3; examples 1-3,6-12 * | 1-7 | |
| A | WO 2008/041348 A1 (NIPPON POLYURETHANE KOGYO KK [JP]; SUGANO AKIRA [JP] ET AL.) 10 April 2008 (2008-04-10) * claim 2; examples 1-3,6-18 * | 1-7 | TECHNICAL FIELDS SEARCHED (IPC) C08G C08J B32B |

The present search report has been drawn up for all claims

| Place of search | Date of completion of the search | Examiner |
|---|---|---|
| Munich | 10 May 2021 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 21 3852

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2021

| Patent document cited in search report | | Publication date | Patent family member(s) | | | Publication date |
|---|---|---|---|---|---|---|
| JP 2016074886 | A | 12-05-2016 | CN | 106687491 | A | 17-05-2017 |
| | | | JP | 6809685 | B2 | 06-01-2021 |
| | | | JP | 2016074886 | A | 12-05-2016 |
| | | | KR | 20170044712 | A | 25-04-2017 |
| | | | TW | 201619226 | A | 01-06-2016 |
| WO 2018022612 | A1 | 01-02-2018 | BR | 112019001490 | A2 | 18-06-2019 |
| | | | CA | 3031770 | A1 | 01-02-2018 |
| | | | CN | 109661413 | A | 19-04-2019 |
| | | | EP | 3487902 | A1 | 29-05-2019 |
| | | | JP | 2019522095 | A | 08-08-2019 |
| | | | KR | 20190022910 | A | 06-03-2019 |
| | | | US | 2018022884 | A1 | 25-01-2018 |
| | | | US | 2020385541 | A1 | 10-12-2020 |
| | | | WO | 2018022612 | A1 | 01-02-2018 |
| WO 2010098936 | A1 | 02-09-2010 | AR | 075600 | A1 | 20-04-2011 |
| | | | AU | 2010218370 | A1 | 04-08-2011 |
| | | | CN | 102325818 | A | 18-01-2012 |
| | | | EP | 2401312 | A1 | 04-01-2012 |
| | | | JP | 2012518705 | A | 16-08-2012 |
| | | | KR | 20110129920 | A | 02-12-2011 |
| | | | US | 2010216904 | A1 | 26-08-2010 |
| | | | WO | 2010098936 | A1 | 02-09-2010 |
| WO 2008041347 | A1 | 10-04-2008 | JP | 2008081701 | A | 10-04-2008 |
| | | | WO | 2008041347 | A1 | 10-04-2008 |
| WO 2008041348 | A1 | 10-04-2008 | JP | 2008081702 | A | 10-04-2008 |
| | | | WO | 2008041348 | A1 | 10-04-2008 |

EPO FORM P0459

For more details about this annex : see Official Journal of the European Patent Office, No. 12/82

**REFERENCES CITED IN THE DESCRIPTION**

**Patent documents cited in the description**

- JP 2016074886 A

- JP 2019533754 A